# EUROPEAN PATENT APPLICATION

(11) **EP 4 694 369 A1**
(43) Date of publication of application: **11.02.2026**
(21) Application number: 23946264.1
(22) Date of filing: 27.07.2023
(51) Int. Cl.: H04W 52/02

(54) **WAKE-UP SIGNAL SENDING METHOD AND APPARATUS, WAKE-UP SIGNAL RECEIVING METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Novagraaf Technologies
(86) International application number: PCT/CN2023/109636
(87) International publication number: WO 2025/020182

(57) **Abstract**

A wake-up signal sending method and apparatus, a wake-up signal receiving method and apparatus, and a device and a storage medium, which belong to the technical field of mobile communications. The method is executed by a network device, and comprises: sending wake-up signals (801), wherein the wake-up signals corresponding to at least two terminals or at least two terminal sets are carried by different frequency-domain resources and/or time-domain resources. The solution supports the sending of wake-up signals for a plurality of terminals or a plurality of terminal sets.

## Description

### TECHNICAL FIELD

The present disclosure relates to the field of communication technologies, and particularly relates to a method and apparatus for transmitting wake-up signals, a method and apparatus for receiving wake-up signals, and a device and a storage medium thereof.

### RELATED ART

With the continuous development of mobile communication technologies, a mobile communication system supports more and more types of terminals, and some types of terminals have a high power saving requirement.

In the related art, a terminal maintains in a power saving state in a case where no communication is needed, and a network device may wake up the terminal using a wake-up signal.

### SUMMARY

Embodiments of the present disclosure provide a method and apparatus for transmitting wake-up signals, a method and apparatus for receiving wake-up signals, and a device and a storage medium thereof. The technical solutions are as follows.

In an aspect of the embodiments of the present disclosure, a method for transmitting wake-up signals is provided. The method is performed by a network device, and the method includes: transmitting a wake-up signal, wherein wake-up signals corresponding to at least two terminals or at least two terminal sets are carried on different frequency-domain resources and/or different time-domain resources.

In an aspect of the embodiments of the present disclosure, a communication method is provided. The method is performed by a terminal, and the method includes: receiving a wake-up signal for the terminal on a frequency-domain resource and/or a time-domain resource corresponding to the terminal; wherein wake-up signals for at least two terminals or at least two terminal sets are carried on different frequency-domain resources and/or different time-domain resources.

In another aspect of the embodiments of the present disclosure, an apparatus for transmitting wake-up signals is provided. The apparatus includes: a transmitting module, configured to transmit a wake-up signal, wherein wake-up signals corresponding to at least two terminals or at least two terminal sets are carried on different frequency-domain resources and/or different time-domain resources.

In another aspect of the embodiments of the present disclosure, an apparatus for receiving wake-up signals is provided. The apparatus includes: a receiving module, configured to receive a wake-up signal for a terminal on a frequency-domain resource and/or a time-domain resource corresponding to the terminal; wherein wake-up signals for at least two terminals or at least two terminal sets are carried on different frequency-domain resources and/or different time-domain resources.

In another aspect of the embodiments of the present disclosure, a terminal is provided. The terminal includes: a processor, a memory, and a transceiver; wherein the memory stores a computer program, wherein the computer program, when run by the processor, causes the terminal to perform the method for receiving wake-up signals as described above.

In another aspect of the embodiments of the present disclosure provide a network device. The network device includes: a processor, a memory, and a transceiver; wherein the memory stores a computer program, wherein the computer program, when run by the processor, causes the network device to perform the method for transmitting wake-up signals as described above.

In another aspect of the embodiments of the present disclosure, a computer-readable storage medium is provided, wherein the computer-readable storage medium stores a computer program. The computer program, when run by a processor, causes the processor to perform the method for transmitting wake-up signals or the method for receiving wake-up signals as described above.

In another aspect of the embodiments of the present disclosure, a chip is provided. The chip is configured to run in a communication device, to cause the communication device to perform the method for transmitting wake-up signals or the method for receiving wake-up signals as described above.

In another aspect of the embodiments of the present disclosure, a computer program product is provided, wherein the computer program product includes one or more computer instructions stored in a computer-readable storage medium. The one or more computer instructions, when loaded by a processor of a communication device from the computer-readable storage medium and run by the processor, causes the communication device to perform the method for transmitting wake-up signals or the method for receiving wake-up signals as described above.

In another aspect of the embodiments of the present disclosure, a computer program is provided. The computer program, when run by processor of a communication device, causes the communication device to perform the method for transmitting wake-up signals or the method for receiving wake-up signals as described above.

In the technical solutions of transmitting and receiving wake-up signals according to the embodiments of the present disclosure, when transmitting a wake-up signal to a terminal, the network device carries the wake-up signals corresponding to at least two terminals or at least two terminal sets on different frequency-domain resources and/or different time-domain resources. Wake-up signals in the MC-ASK waveform or in the MC-FSK waveform, e.g., low-power wake-up signals, are not suitable to carry a larger number of bits. However, in technical solutions according to the embodiments of the present disclosure, the wake-up signals corresponding to a plurality of terminals or a plurality of terminal sets are carried on different frequency-domain resources and/or different time-domain resources, respectively, thereby supporting transmission of wake-up signals for a plurality of terminals or terminal sets.

### BRIEF DESCRIPTION OF DRAWINGS

FIG. 1 illustrates a schematic diagram of an architecture of a communication system according to some embodiments of the present disclosure;
FIG. 2 illustrates a schematic diagram of paging early indication (PEI) involved in the present disclosure;
FIG. 3 illustrates a system block diagram of a zero-powered wake up receiver (WUR) involved in the present disclosure;
FIG. 4 illustrates a schematic diagram of a generation process of a low power-wake up signal (LP-WUS) involved in the present disclosure;
FIG. 5 illustrates a schematic diagram of another generation process of an LP-WUS involved in the present disclosure;
FIG. 6 illustrates a schematic diagram of another generation process of an LP-WUS involved in the present disclosure;
FIG. 7 illustrates a schematic diagram of another generation process of an LP-WUS involved in the present disclosure;
FIG. 8 illustrates a flowchart of a method for transmitting wake-up signals according to some embodiments of the present disclosure;
FIG. 9 illustrates a flowchart of a method for receiving wake-up signals according to some embodiments of the present disclosure;
FIG. 10 illustrates a flowchart of a method for transmitting and receiving wake-up signals according to some embodiments of the present disclosure;
FIG. 11 illustrates a schematic diagram of carrying wake-up signals involved in the present disclosure;
FIG. 12 illustrates another schematic diagram of carrying wake-up signals involved in the present disclosure;
FIG. 13 illustrates a schematic diagram of a subcarrier group involved in the present disclosure;
FIG. 14 illustrates a schematic diagram of a signal generation process involved in the present disclosure;
FIG. 15 illustrates a schematic diagram of division of terminal groups involved in the present disclosure;
FIG. 16 illustrates a schematic diagram of another division of terminal groups involved in the present disclosure;
FIG. 17 illustrates a schematic diagram of carrying wake-up signals on a time-domain resource according to some embodiments of the present disclosure;
FIG. 18 illustrates a block diagram of an apparatus for transmitting wake-up signals according to some embodiments of the present disclosure;
FIG. 19 illustrates a block diagram of an apparatus for receiving wake-up signals according to some embodiments of the present disclosure; and
FIG. 20 illustrates a schematic structural diagram of a communication device according to some embodiments of the present disclosure.

### DETAILED DESCRIPTION

For clearer descriptions of the objectives, technical solutions, and advantages of the present disclosure, the embodiments of the present disclosure are further described in detail hereinafter with reference to the accompanying drawings.

A network architecture and a service scenario described in the embodiments of the present disclosure are intended to describe the technical solutions according to the embodiments of the present disclosure more clearly, and do not constitute limitations on the technical solutions according to the embodiments of the present disclosure. Those of ordinary skill in the art may understand that, with evolution of the network architecture and emergence of a new service scenario, the technical solutions according to the embodiments of the present disclosure are also applicable to similar technical problems.

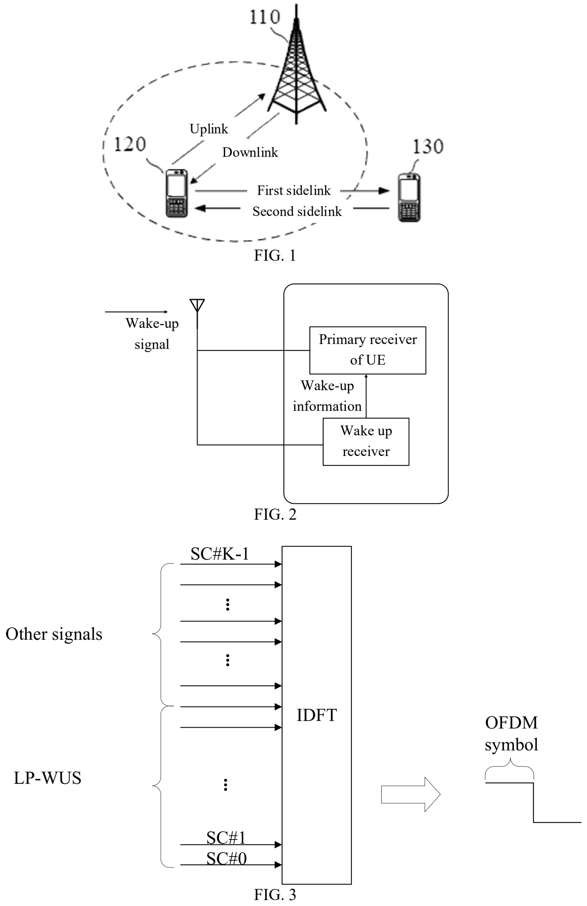

FIG. 1 illustrates a schematic diagram of a communication system according to some embodiments of the present disclosure. The communication system includes a network device 110 and a terminal 120, and may further include or not include a terminal 130, which is not limited in the present disclosure.

The network device 110 in the present disclosure provides wireless communication functions. The network device includes but not limited to: an evolved Node-B (eNB), a radio network controller (RNC), a Node-B (NB), a base station controller (BSC), a base transceiver station (BTS), a home base station (e.g., a home evolved Node-B , or a home Node-B , HNB), a baseband unit (BBU), an access point (AP) in a wireless fidelity (Wi-Fi) system, a wireless relay node, a wireless backhaul node, a transmission point (TP) or a transmission and reception point (TRP), or the like. It may also be a next generation Node-B (gNB) or a transmission reception point (a TRP or a TP) in a 5th generation (5G) mobile communication system, or one or a set of antenna panels (including a plurality of antenna panels) of a base station in the 5G system, or a network node constituting a gNB or a transmission point, such as a baseband unit (BBU) or a distributed unit (DU), or the like, or a base station in a beyond 5th generation (B5G), a 6th generation (6G) mobile communication system, or the like, or a core network (CN), a fronthaul, a backhaul, a radio access network (RAN), a network slice, or the like, or a serving cell, a primary cell (PCell), a primary secondary cell (PSCell), a special Cell (SpCell), a secondary cell (SCell), a neighbor cell, or the like, of the terminal.

The terminal 120 and/or the terminal 130 in the present disclosure is also known as a UE, an access terminal, a user unit, a user station, a mobile station, a mobile terminal, a remote station, a remote terminal, a mobile device, a user terminal, a terminal, a wireless communication device, a user agent, a user device. The terminal includes but is not limited to: a handheld device, a wearable device, an in-vehicle device, an Internet of things device, or the like, such as: a mobile phone, a tablet, an e-book reader, a laptop, a desktop computer, a television, a game console, a mobile Internet device (MID), an augmented reality (AR) terminal, a virtual reality (VR) terminal, and a mixed reality (MR) terminal, a wearable device, a handle, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), a customer premises equipment (CPE), or the like.

The network device 110 and the terminal 120 communicate with each other using an air interface technology, such as a Uu interface.

In some embodiments, there are two types of communication scenarios between the network device 110 and the terminal 120: an uplink communication scenario and a downlink communication scenario. Uplink communication refers to transmitting signals to the network device 110; downlink communication refers to transmitting signals to the terminal 120.

The terminal 120 and the terminal 130 communicate with each other using an air interface technology, such as a PC5 interface.

In some embodiments, there are two types of communication scenarios between the terminal 120 and the terminal 130: a first sidelink communication scenario and a second sidelink communication scenario. The first sidelink communication refers to transmitting signals to the terminal 130; the second sidelink communication refers to transmitting signals to the terminal 120.

The terminal 120 and the terminal 130 are both within network coverage and located in the same cell, or the terminal 120 and the terminal 130 are both within network coverage but located in different cells, or the terminal 120 is within network coverage, but the terminal 130 is outside network coverage.

The technical solutions according to the embodiments of the present disclosure may be applied to various communication systems, such as: a global system of mobile communication (GSM) system, a code-division multiple access (CDMA) system, a wideband code-division multiple access (WCDMA) system, a general packet radio service (GPRS) system, a long-term evolution (LTE) system, an LTE frequency division duplex (FDD) system, an LTE time division duplex (TDD) system, an advanced long-term evolution (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN) system, a wireless fidelity (Wi-Fi) system, a cellular Internet of things (IoT) system, a cellular passive Internet of things system, and may also be applied to the subsequent evolution systems of 5G NR system, and may also be applied to B5G, 6G, and subsequent evolution systems. In some embodiments of the present disclosure, "NR" may also be referred to as 5G NR system or 5G system. Among them, the 5G mobile communication system may include non-standalone (NSA) and/or standalone (SA).

The technical solutions provided by the embodiments of the present disclosure may also be applied to a machine-type communications (MTC), a long-term evolution-machine (LTE-M), a device-to-device (D2D) network, a machine-to-machine (M2M) network, an IoT network, or other networks. The IoT network may include an Internet of vehicles. The communication methods in the Internet of vehicles system are collectively referred to as vehicle-to-X (V2X, X represents anything). For example, the V2X may include: vehicle-to-vehicle (V2V) communications, vehicle-to-infrastructure (V2I) communications, vehicle-to-pedestrian (V2P) communications, vehicle-to-network (V2N) communications, or the like.

### 1) 5G

The 5G technology adopts an NR design. On the basis of the orthogonal frequency division multiplex (OFDM) multiple-input multiple-output (MIMO) underlying air interface framework of the LTE, a large amount of technical enhancements and improvements have been made to the system design in the NR design, including support for higher frequency ranges and larger carrier bandwidths, flexible frame structures, diverse parameter sets, reference signal design optimization, new coding schemes, symbol-level resource scheduling, MIMO enhancements, reduced latency, coverage enhancements, mobility enhancements, terminal power savings, signaling design optimization, a new network architecture, enhanced quality of service (QoS) guarantee, network slicing, V2X, industrial Internet of things (IIoT), NR-U designs, and excellent support for various vertical industries.

Mobile internet and mobile IoT are two major forces driving the development of 5G, and provide broad prospects for the future development of mobile communications. Three major application scenarios are defined in 5G, which are enhanced mobile broadband (eMBB), ultra-reliable & low-latency communication (URLLC), and massive machine-type communications (mMTC). Here, eMBB is primarily oriented toward the mobile internet, while URLLC and mMTC are oriented toward the mobile IoT. The mobile internet builds a comprehensive information ecosystem that is centered around users. In recent years, human-centered demands, such as ultra-high-definition videos, VR, AR, remote education, telecommuting, telemedicine, and wireless home entertainment, become increasingly widespread. With the rapid emergence of these new service demands, higher requirements will be inevitably put forward on the transmission bandwidths and data rates of mobile communications. In addition, vertical industries, such as mobile IoT, industrial IoT, V2X, smart grid, and smart cities, are rapidly transforming toward informatization and digitalization. In addition to smartphones, the forms of mobile terminals such as wearable devices, cameras, unmanned aerial vehicles, robots, vehicle-mounted and ship-mounted terminal modules, and industry-customized terminals have become more diverse.

### 2) Power saving technique for terminals

NR standards for 5G ensure extremely high network system data rates to meet the minimum performance requirements for 5G data throughput set by the International Telecommunication Union (ITU) for IMT-2020. Meanwhile, power consumption of the terminal is also an important performance requirement indicator for IMT-2020. Starting with release 16 (R16), the NR standards have been specifically launched to focus on power saving optimization for terminals. In R16 standards, power saving signals have been introduced to achieve further power savings for UEs in a radio resource control (RRC) connected (RRC_CONNECTED) state. The power saving signals are used in conjunction with discontinuous reception (DRX) mechanisms, and the terminal receives an indication of the power saving wake-up signal prior to a DRX ON duration. The R17 standards optimize power savings for the UEs in an idle state when receiving paging messages by introducing similar power saving signals. A power saving signal when the UE is in an RRC IDLE state or an RRC INACTIVE state is referred to as PEI, wherein the PEI is used to indicate whether the UE receives a paging PDCCH at a target paging occasion (PO) before the target PO arrives and indicate whether the terminal needs to receive paging at a PO before the PO of the terminal arrives. In a case where the terminal is not paged, the PEI can avoid unnecessary paging receiving, thereby reducing the power consumption of the terminal. The PEI is carried over a PDCCH. To reduce the overheads of the PEI, one PEI indicates whether one or more terminal subgroups in each PO of one or more POs need to receive paging. The terminal subgroup is a further group of a plurality of terminals that are calculated, based on a terminal identifier (UE ID), to correspond to one PO.

FIG. 2 illustrates a schematic diagram of PEI involved in the present disclosure. As illustrated in FIG. 2, one PEI is associated with four POs, and the terminals corresponding to each PO are further divided into K subgroups. Therefore, the number of indication bits carried on one PEI is 4*K, wherein each bit indicates whether one terminal subgroup in one PO needs to receive paging at the PO.

In R17 standards, an enhanced scheme for search space set handover is further introduced, along with a power saving scheme that skips PDCCH detection when necessary, i.e., a PDCCH skipping scheme.

3) For further power savings for UEs, it is considered to introduce a WUR in the 3GPP R18 standards to receive a LP-WUS. The WUR has characteristics of extremely low costs, extremely low complexity, and extremely low power consumption, and the WUR receives wake-up signals mainly based on envelop detection. Therefore, the LP-WUS for the WUR is modulated in a different way and has a different waveform from signals carried over PDCCH in the existing 3GPP R16 and R17 standards. The wake-up signal is mainly an envelope signal that is acquired by performing ASK modulation on a carrier signal. Demodulation of the envelope signal is also mainly achieved by driving a low power-consumption circuit based on the energy provided by radio frequency signals, and thus the envelope signal is passive. The WUR may also be powered by a terminal. Regardless of the power supply method, the power consumption of the receiver is significantly reduced compared to the traditional receiver of the UE. The WUR may be used in combination with the UE, either as an additional module of the receiver of the UE or as an independent wake-up functional module for the UE.

A system block diagram of a zero-powered WUR is as illustrated in FIG. 3. The WUR receives a wake-up signal, and the UE is indicated to turn on the primary receiver in a case where the UE needs to turn on the receiver, otherwise, the primary receiver of the UE is in an off state.

### 4) Wake-up signal generation method based on WUR

To achieve power savings for the WUR, the WUR must have low complexity. Therefore, the wake-up signal is in an ASK waveform or an FSK waveform, which can be detected by receivers with low complexity. The ASK waveform generally adopts an OOK signal. In an existing OFDM system, to use an existing OFDM transmitter to generate a wake-up signal so as to minimize additional hardware overhead, the OOK signal is generated by multi-carrier (MC), and thus the OOK signal is also referred to as an MC-OOK signal. The MC-OOK signal may be generated by the existing multi-carrier modulation, for example, the OFDM modulation generates the OOK signal, which may maintain a good compatibility with the existing OFDM system and reduce the complexity of the transmitter introduced by implementing the WUR signal.

The WUS signal waveform discussed in the 3GPP R18 standards may be an MC-ASK waveform, wherein K represents the number of points in IDFT and N represents the number of subcarriers used for transmission of the WUS. By way of this example, the MC-ASK waveform is generated in the following manners.

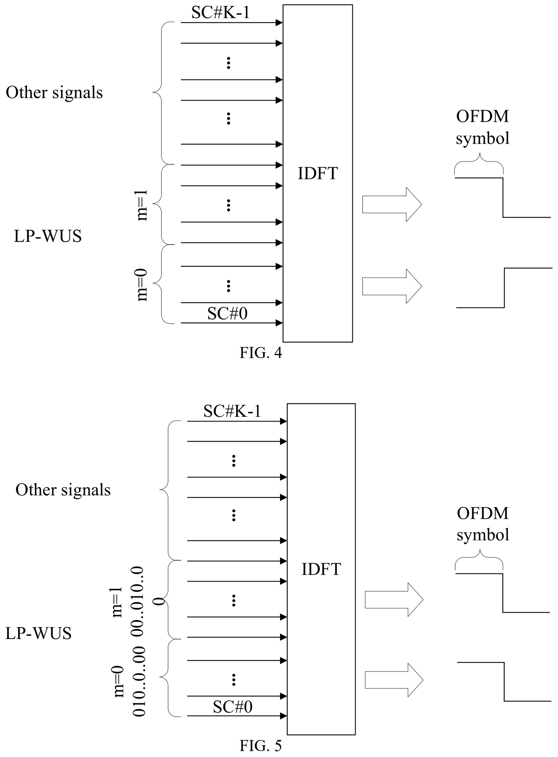

OOK-1: Each OFDM symbol carries one bit, wherein an output signal corresponding to the subcarrier carrying the LP-WUS after modulation and IDFT is OOK=1, and the corresponding output signal is OOK=0 when the subcarrier carrying the LP-WUS is zero powered. The schematic diagram of the LP-WUS generation process is illustrated in FIG. 4.

OOK-2: Each OFDM symbol carries M bits in a frequency domain. The N subcarriers carrying the LP-WUS are divided into M segments, with each segment carrying one bit of information. Within each segment, in a case where all subcarriers are modulated, the corresponding output signal is OOK=1, and in a case where all subcarriers is zero powered, the corresponding output signal is OOK=0. Taking M=2 as an example, the schematic diagram of the LP-WUS generation process is illustrated in FIG. 5.

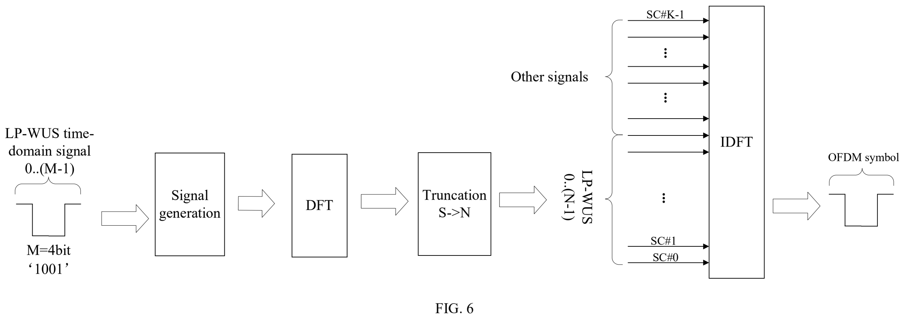

OOK-3: Each OFDM symbol carries one bit. The N subcarriers carrying the LP-WUS are divided into M segments. Within each of the M segments, in a case where one subcarrier is modulated and the other subcarriers are defined as zero power, the corresponding output signal is OOK=1; and in a case where all subcarriers in all segments are defined as zero power, the corresponding output signal is OOK=0. The schematic diagram of the LP-WUS generation process is illustrated in FIG. 6.

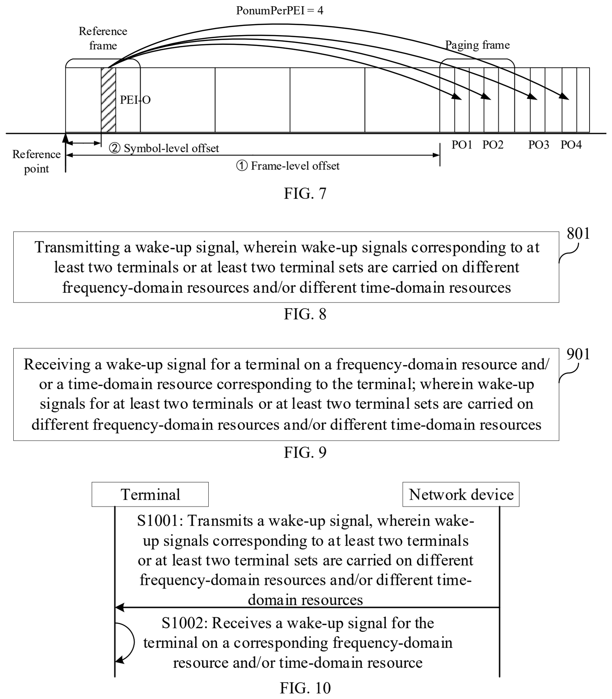

OOK-4: Each OFDM symbol carries M bits in a time domain. The N subcarriers carrying the LP-WUS are generated by performing discrete Fourier transformation (DFT). The M bits are represented by S sampling points, and after the DFT, the S sampling points form S subcarriers. Processing such as truncation is performed on the S subcarriers to form N subcarriers, and then IDFT is performed to generate the OOK signal. Taking M=4 as an example, the schematic diagram of the LP-WUS generation process is illustrated in FIG. 7.

In addition to the MC-ASK waveform, LP-WUS may be in an MC-FSK waveform, which mainly includes the following modes.

FSK-1: The N subcarriers carrying the LP-WUS are divided into M pairs of segments. In each OFDM symbol, one segment in each pair of segments is modulated, while the other segment in each pair of segments is defined as zero power.

FSK-2: The N subcarriers carrying the LP-WUS are divided into 2^{M} segments. In each OFDM symbol, one segment in the 2^{M} segments is modulated, while the other segments in the 2^{M} segments are defined as zero power.

Because the wake-up signals introduced in R18 adopts new signal waveforms and generation methods, how to carry wake-up information is a problem to be addressed.

FIG. 8 illustrates a flowchart of a method for transmitting wake-up signals according to some embodiments of the present disclosure. The method is performed by a network device, and the network device may be the network device 110 in the network architecture illustrated in FIG. 1. The method includes the following process.

In process 801, the network device transmits a wake-up signal, wherein wake-up signals corresponding to at least two terminals or at least two terminal sets are carried on different frequency-domain resources and/or different time-domain resources.

In the embodiments of the present disclosure, when transmitting a wake-up signal for a terminal, the network device carries the wake-up signals corresponding to a plurality of terminals or a plurality of terminal sets on different frequency-domain resources and/or different time-domain resources, respectively.

For example, for a plurality of terminals, the wake-up signals for some of the plurality of terminals are carried on a certain frequency-domain resource and/or time-domain resource, and the wake-up signals for the other terminals are carried on another frequency-domain resource and/or time-domain resource. That is, the frequency-domain resources and/or time-domain resources carrying the wake-up signals for the plurality of terminals are not completely the same, and the wake-up signals for at least two terminals are carried on different frequency-domain resources and/or time-domain resources.

Alternatively, for a plurality of terminals, the wake-up signals for the plurality of terminals are respectively carried on different frequency-domain resource and/or time-domain resource, or the wake-up signals for the plurality of terminals are respectively carried on different frequency-domain resources and/or time-domain resources.

For another example, for a plurality of terminal sets, the wake-up signals for some of the plurality of terminal sets are carried on a certain frequency-domain resource and/or time-domain resource, and the wake-up signals for the other terminal sets are carried on another frequency-domain resource and/or time-domain resource. That is, the frequency-domain resources and/or time-domain resources carrying the wake-up signals for the plurality of terminal sets are not completely the same, and the wake-up signals for at least two terminal sets are carried on different frequency-domain resources and/or time-domain resources.

Alternatively, for a plurality of terminal sets, the wake-up signals for the plurality of terminal sets are respectively carried on different frequency-domain resource and/or time-domain resource, or the wake-up signals for the plurality of terminal sets are respectively carried on different frequency-domain resources and/or time-domain resources.

In some embodiments, the above wake-up signal is received by a first receiver of the terminal, and the wake-up signal is used to wake up a second receiver of the terminal.

The above terminal includes the first receiver and the second receiver. The second receiver has more functions than the first receiver, and accordingly, the power consumption of the second receiver is higher than the power consumption of the first receiver. For example, the functions of the first receiver include receiving the wake-up signal and waking up the second receiver. In some embodiments, the first receiver also has some other functions, for example, a certain measuring function and/or a synchronizing function. The functions of the second receiver may include a measuring function, a synchronizing function, a paging signal receiving function, a data receiving function, and the like.

In some embodiments, the first receiver is a WUR, and accordingly, the above wake-up signal is a LP-WUS, and the structure of the terminal is as illustrated in FIG. 3.

In summary, in the technical solutions according to the embodiments of the present disclosure, when transmitting a wake-up signal to a terminal, the network device carries the wake-up signals corresponding to at least two terminals or at least two terminal sets on different frequency-domain resources and/or different time-domain resources. Wake-up signals in the MC-ASK waveform or in the MC-FSK waveform, e.g., low-power wake-up signals, are not suitable to carry a larger number of bits. However, in the technical solutions according to the embodiments of the present disclosure, the wake-up signals corresponding to a plurality of terminals or a plurality of terminal sets are carried on different frequency-domain resources and/or different time-domain resources, thereby supporting transmission of wake-up signals for a plurality of terminals or terminal sets.

FIG. 9 illustrates a flowchart of a method for receiving wake-up signals according to some embodiments of the present disclosure. The method is performed by a terminal, and the terminal may be the terminal 120 or the terminal 130 in the network architecture illustrated in FIG. 1. The method includes the following process.

In process 901, the terminal receives a wake-up signal for the terminal on a frequency-domain resource and/or a time-domain resource corresponding to the terminal; wherein wake-up signals for at least two terminals or at least two terminal sets are carried on different frequency-domain resources and/or different time-domain resources.

In the embodiments of the present disclosure, the wake-up signals corresponding to a plurality of terminals or a plurality of terminal sets are carried on different frequency-domain resources and/or different time-domain resources, respectively. Accordingly, the terminal receives the wake-up signal on the corresponding frequency-domain resource and/or time-domain resource.

In some embodiments, the frequency-domain resource and/or the time-domain resource corresponding to the terminal is configured/indicated by the network device to the terminal in a semi-static manner or in a dynamic manner, e.g., over signaling such as an RRC, and a medium access control control element (MAC CE).

In summary, in the technical solutions according to the embodiments of the present disclosure, when transmitting a wake-up signal to a terminal, the network device carries the wake-up signals corresponding to at least two terminals or at least two terminal sets on different frequency-domain resources and/or different time-domain resources. Wake-up signals in the MC-ASK waveform or in the MC-FSK waveform, e.g., low-power wake-up signals, are not suitable to carry a larger number of bits. However, in the technical solutions according to the embodiments of the present disclosure, the wake-up signals corresponding to a plurality of terminals or a plurality of terminal sets are carried on different frequency-domain resources and/or different time-domain resources, thereby supporting transmission of wake-up signals for a plurality of terminals or terminal sets.

Furthermore, the terminal receives the wake-up signal on the corresponding frequency-domain resource and/or time-domain resource, without the need to monitor the wake-up signals on all frequency-domain resources and/or time-domain resources, which further improves the power saving performance of the terminal.

FIG. 10 illustrates a flowchart of a method for transmitting and receiving wake-up signals according to some embodiments of the present disclosure. The method is performed by a terminal and a network device in interaction. The terminal may be the terminal 120 or the terminal 130 in the network architecture illustrated in FIG. 1, and the network device may be the network device 110 in the network architecture illustrated in FIG. 1. The method includes the following processes.

In process 1001, the network device transmits a wake-up signal, wherein wake-up signals corresponding to at least two terminals or at least two terminal sets are carried on different frequency-domain resources and/or different time-domain resources.

In some embodiments, the wake-up signal is received by a first receiver of the terminal, and the wake-up signal is used to wake up a second receiver of the terminal.

In some embodiments, one terminal set includes: terminals in a terminal group, or terminals corresponding to a PO, or terminals corresponding to a PO group.

In the embodiments of the present disclosure, the terminals may be divided into terminal sets based on the terminal group. That is, the terminals in each terminal group are divided into one terminal set.

Alternatively, the terminals may be divided into terminal sets based on the PO. That is, the terminals corresponding to each PO are divided into one terminal set. In some embodiments, the terminals corresponding to one PO are divided into a plurality of terminal sets.

Alternatively, the terminals may be divided into terminal sets based on the PO group. That is, the terminals corresponding to each PO group are divided into one terminal set.

In some embodiments, in a case where the wake-up signals corresponding to at least two terminals or at least two terminal sets are carried on different frequency-domain resources, the wake-up signals corresponding to the at least two terminals or the at least two terminal sets are carried on different frequency-domain bandwidths, different subcarrier groups, or different subcarrier segments.

A resource for carrying a wake-up signal may be divided into different frequency-domain bandwidths, different subcarrier groups, or different subcarrier segments in a frequency domain. Each frequency-domain bandwidth, each subcarrier group or each subcarrier segment carries wake-up signals for one or a plurality of terminals, and alternatively, each frequency-domain bandwidth, each subcarrier group or each subcarrier segment carries wake-up signals for one or a plurality of terminal sets. Different frequency-domain bandwidths or subcarrier groups carry wake-up signals for different terminals or terminal sets. In some embodiments, one frequency-domain bandwidth or subcarrier group is divided into a plurality of subcarrier segments.

In some embodiments, the wake-up signals carried on different frequency-domain bandwidths, subcarrier groups or subcarrier segments are used to indicate wake-up information for different terminals, terminal sets, POs or PO groups.

In the present disclosure, the network device transmits a wake-up signal on a plurality of frequency-domain bandwidths, subcarrier groups or subcarrier segments. The wake-up signal may be considered as one wake-up signal transmitted over a plurality of frequency-domain bandwidths, subcarrier groups or subcarrier segments, or may be considered as a plurality of different wake-up signals transmitted on different frequency-domain bandwidths or subcarrier groups.

In some embodiments, in a case where the wake-up signals corresponding to the at least two terminals or the at least two terminal sets are carried on different frequency-domain bandwidths or different subcarrier groups, a plurality of frequency-domain bandwidths or subcarrier groups in a frequency domain are used to carry different wake-up signals, wherein different wake-up signals are used to carry wake-up information for different terminals or terminal sets.

In the frequency domain, a portion of resources may be configured as resources for carrying wake-up signals, and in a plurality of frequency-domain bandwidths or subcarrier groups in this portion of resources, the wake-up information is different for different terminals or terminal sets. The different wake-up information is carried on wake-up signals on different frequency-domain bandwidths or subcarrier groups. Alternatively, the wake-up signals carried on the plurality of frequency-domain bandwidths or subcarrier groups are different from each other or are not completely the same. Accordingly, the terminals or terminal sets corresponding to the wake-up information carried on the plurality of wake-up signals are different from each other or are not completely the same.

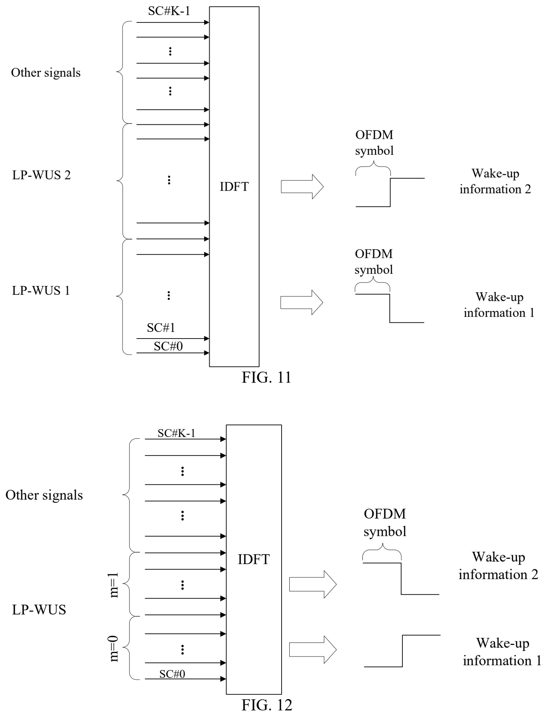

Taking the generation manner OOK-1 of the wake-up signal as an example, a plurality of frequency-domain bandwidths or subcarrier groups are available in the frequency domain for carrying different wake-up signals, wherein different wake-up signals carry wake-up information for different terminals or terminal sets. The schematic diagram of carrying the wake-up information is as illustrated in FIG. 11.

In some embodiments, in a case where the wake-up signals for at least two terminals or at least two terminal sets is carried on different subcarrier segments, M subcarrier segments in a frequency domain are used to carry the wake-up signals, and the M subcarrier segments are used to carry M bits, wherein bits carried on different subcarrier segments correspond to wake-up information for different terminals or terminal sets, and M is an integer greater than or equal to 2.

In the frequency domain, a portion of resources may be configured as resources for carrying wake-up signals, and M subcarrier segments are available in this portion of resources, wherein the number of the subcarrier segments may also be not limited to be M. The M subcarrier segments carry respective bits, and the bits carried on different subcarrier segment correspond to wake-up information for different terminals or terminal sets.

In some embodiments, a plurality of frequency-domain bandwidths or subcarrier groups are available in the frequency domain, and each frequency-domain bandwidth or subcarrier group includes M subcarrier segments.

That is, the frequency resources for carrying the wake-up signals includes a plurality of groups of M subcarrier segments, and each group of M subcarrier segments corresponds to one frequency-domain bandwidth or subcarrier group.

Taking the generation manner OOK-2 of the wake-up signal as an example, FIG. 12 illustrates another schematic diagram of carrying wake-up signals according to some embodiments of the present disclosure. As illustrated in FIG. 12, M subcarrier segments are available in the frequency domain for carrying the wake-up signals, and the M subcarrier segments carry M bits. In this case, the information carried on different subcarrier segments corresponds to wake-up information for different terminals or terminal sets. As illustrated in FIG. 12, the subcarrier group carrying the wake-up signals includes two segments, and in each OFDM symbol, each of the two subcarrier segments carries one bit of information. The information carried on the two subcarrier segments corresponds to wake-up information for different terminals or terminal sets, respectively.

Furthermore, similar to the OOK-1 case, a plurality of frequency-domain bandwidths or subcarrier groups are available for carrying different wake-up signals, and each frequency-domain bandwidth or subcarrier group includes M subcarrier segments. Different wake-up signals carry wake-up information for different terminals or terminal sets.

In some embodiments, in a case where the wake-up signals for the at least two terminals or the at least two terminal sets are carried on different subcarrier segments, M subcarrier segments in a frequency domain are used to carry the wake-up signals, and one subcarrier in each of the M subcarrier segments is modulated such that one wake-up signal is carried on the M subcarrier segments. Here, M is an integer greater than or equal to 2. Optionally, in the above embodiments, a plurality of frequency-domain bandwidths or subcarrier groups are available in the frequency domain, and each frequency-domain bandwidth or subcarrier group of the plurality of frequency-domain bandwidths or subcarrier groups in the frequency domain includes M subcarrier segments. The plurality of frequency-domain bandwidths or subcarrier groups are used to carry different wake-up signals, respectively, and different wake-up signals are used to carry wake-up information for different terminals or terminal sets.

Taking the generation manner OOK-3 of the wake-up signal as an example, M subcarrier segments are available in the frequency domain for carrying the wake-up signals, one subcarrier in each of the M subcarrier segments is modulated for carrying the signal OOK=1. Similar to the OOK-1 case, in the transmitting method of OOK-3, in a case where the M subcarrier segments carry only one wake-up signal, a plurality of frequency-domain bandwidths or subcarrier groups are available for carrying different wake-up signals, wherein each frequency-domain bandwidth or subcarrier group includes M subcarrier segments. Different wake-up signals carry wake-up information for different terminals or terminal sets.

In some embodiments, one subcarrier in the each of the M subcarrier segments constitutes one subcarrier group, and each of the subcarrier groups is used to carry one wake-up signal.

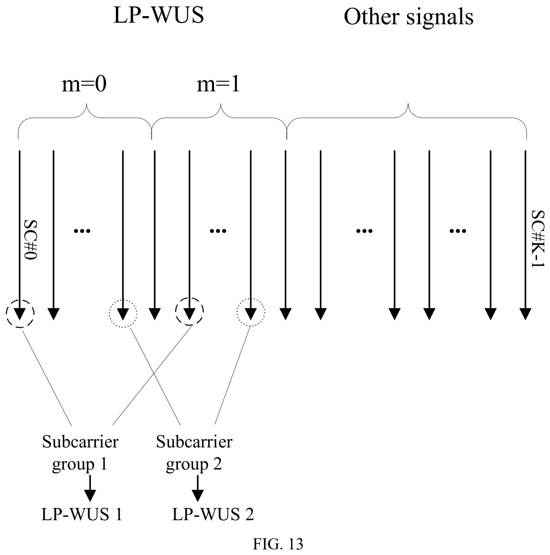

Furthermore, to further increase the utilization ratio of the frequency-domain resources carrying the wake-up signals, the energy of signals carried on one subcarrier can be calculated using a Goertzel filter in the WUR, thereby demodulating that the OOK signal carried on the subcarrier is 1 or 0. Therefore, different subcarriers in each segment of the M subcarrier segments carry different wake-up signals. In this case, a group of M subcarriers from the M subcarrier segments, as a subcarrier group, carries one wake-up signal, and the wake-up signal carries the wake-up information for one or a plurality of terminals or terminal sets. Another group of M subcarriers from the M subcarrier segments, as another subcarrier group, carries another wake-up signal, and the wake-up signal carries the wake-up information for another one or a plurality of terminals or terminal sets. FIG. 13 illustrates a schematic diagram of a subcarrier group involved in the present disclosure. As illustrated in FIG. 13, the subcarriers carrying the wake-up signal are divided into two subcarrier segments, and one subcarrier is taken from each segment to form subcarrier group 1 containing two subcarriers, which is used to carry LP-WUS 1. According to the same method, subcarrier group 2 containing two subcarriers is formed and is used to carry LP-WUS 2.

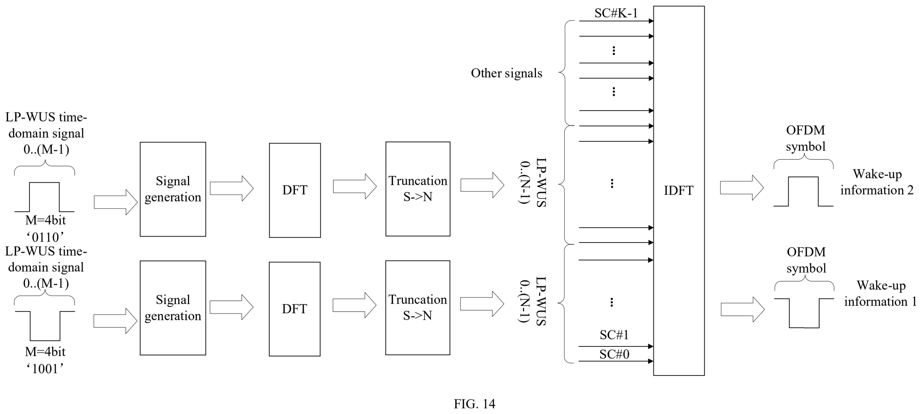

In some embodiments, a plurality of frequency-domain bandwidths or subcarrier groups are available in the frequency domain for carrying different wake-up signals. Different wake-up signals carry wake-up information for different terminals or terminal sets. Taking the generation manner OOK-4 of the wake-up signal as an example, FIG. 14 illustrates a schematic diagram of a signal generation process involved in the present disclosure. As illustrated in FIG. 14, different to-be-generated wake-up information forms wake-up signals through the signal generation process.

In some embodiments, in a case where the wake-up signals for the at least two terminals or the at least two terminal sets are carried on different frequency-domain bandwidths or different subcarrier groups, each frequency-domain bandwidth or subcarrier group in a plurality of frequency-domain bandwidths or subcarrier groups in a frequency domain includes N subcarriers, wherein the N subcarriers are generated by performing the DFT on one wake-up signal. The plurality of different frequency-domain bandwidths or subcarrier groups carry different wake-up signals, wherein different wake-up signals carry wake-up information for different terminals or terminal sets.

In some embodiments, in a case where the wake-up signals corresponding to the at least two terminals or the at least two terminal sets are carried on different frequency-domain bandwidths or different subcarrier groups, each frequency-domain bandwidth or subcarrier group in the plurality of frequency-domain bandwidths or subcarrier groups in the frequency domain includes N subcarriers; wherein the N subcarriers are divided into M pairs of subcarrier segments; and in each pair of the M pairs of subcarrier segments, one subcarrier segment is modulated and the other subcarrier segment is defined as zero-power, such that one of the wake-up signals is carried on the N subcarriers.

In some embodiments, in a case where the wake-up signals corresponding to the at least two terminals or the at least two terminal sets are carried on different frequency-domain bandwidths or different subcarrier groups, each frequency-domain bandwidth or subcarrier group in the plurality of frequency-domain bandwidths or subcarrier groups in the frequency domain includes N subcarriers; wherein the N subcarriers are divided into 2^{M} subcarrier segments, wherein in the 2^{M} subcarrier segments, one subcarrier segment is modulated and other subcarrier segments are defined as zero-power, such that one of the wake-up signals is carried on the N subcarriers.

Taking the generation manners FSK-1 and FSK-2 of the wake-up signal as an example, a plurality of frequency-domain bandwidths or subcarrier groups are available in the frequency domain for carrying different wake-up signals, wherein each of the frequency-domain bandwidths or subcarrier groups contains N subcarriers. Different wake-up signals carry wake-up information for different terminals or terminal sets.

In some embodiments, in a case where one terminal set includes terminals corresponding to one PO or terminals corresponding to one PO group, the terminals corresponding to each PO are divided into a plurality of terminal groups, and each bit in the wake-up information carried in one wake-up signal is used to indicate wake-up information for one terminal group.

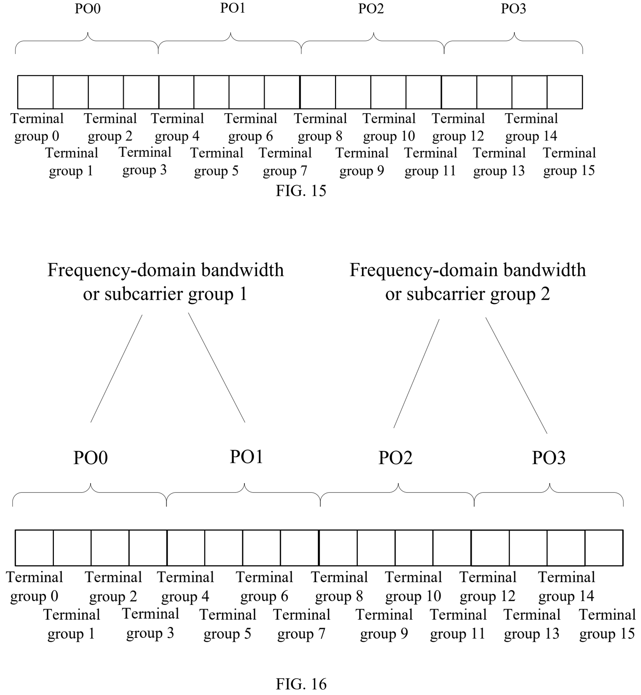

In the above embodiments, the terminals corresponding to one PO may further be divided into a plurality of terminal sets. According to the above method, one bit in the wake-up information indicates the wake-up information for a terminal group in a PO. FIG. 15 illustrates a schematic diagram of division of terminal groups involved in the present disclosure. As illustrated in FIG. 15, the wake-up information carried in the wake-up signal includes 16 bits, indicating wake-up information for 16 terminal groups in four corresponding POs, with four terminal groups in each PO.

In some embodiments, the wake-up information for a plurality of different terminal groups corresponding to different POs is carried in wake-up signals on different frequency-domain bandwidths, different subcarrier groups, or different subcarrier segments.

The wake-up information for a plurality of different terminal groups corresponding to different POs is carried in wake-up signals on different frequency-domain bandwidths or subcarrier groups. FIG. 16 illustrates a schematic diagram of another division of terminal groups involved in the present disclosure. As illustrated in FIG. 16, different frequency-domain bandwidths or subcarrier groups may be frequency-domain bandwidths or subcarrier groups carrying the same wake-up signal or different wake-up signals.

In some embodiments, the method further includes: transmitting configuration information by the network device, and accordingly, receiving the configuration information by the terminal; wherein the configuration information is used for the terminal to determine at least one of:
a frequency-domain resource carrying a wake-up signal;
content of wake-up information carried in a wake-up signal;
a wake-up signal carrying target wake-up information; or
a frequency-domain resource for a wake-up signal corresponding to target wake-up information.

In the above embodiments, in order that the terminal can determine the target frequency-domain bandwidth or subcarrier group carrying the wake-up information for the terminal itself, the network needs to transmit the configuration information. The configuration information is used for the terminal to determine the frequency-domain resource carrying the wake-up signal, the content of the wake-up information, the wake-up signal corresponding to the target wake-up information, or the target frequency-domain bandwidth or subcarrier group in the frequency-domain resource for the wake-up signal corresponding to the target wake-up information.

In some embodiments, the wake-up signals for the at least two terminals or the at least two terminal sets are carried on different time-domain resources.

For example, the wake-up signals carried on different time-domain resources indicate wake-up information for different terminals or terminal sets or indicate wake-up information for terminals corresponding to different POs or PO groups.

In some embodiments, the wake-up signals carried on different time-domain resources are different portions of a wake-up signal for the same terminal or terminal set, or wake-up signals carried on different time-domain resources are wake-up signals for different terminals or terminal sets.

The wake-up signals transmitted on different time-domain resources carry wake-up information for different terminals or terminal set. And the wake-up signals transmitted on different time-domain resources may be different portions of the same wake-up signal or may be different wake-up signals transmitted on different time-domain resources.

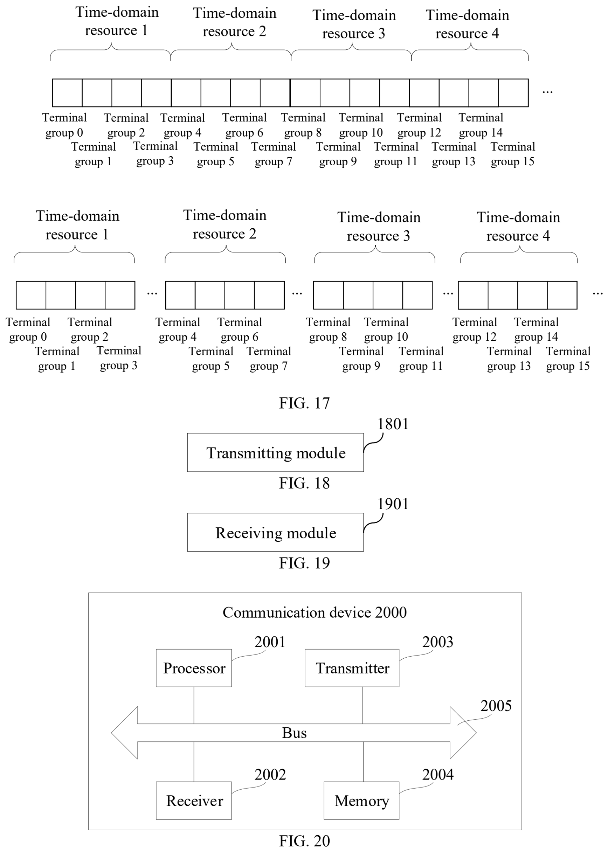

FIG. 17 illustrates a schematic diagram of carrying wake-up signals on a time-domain resource according to some embodiments of the present disclosure. In the example illustrated in FIG. 17, wake-up signals transmitted on different time-domain resources carry wake-up information for different terminal groups, respectively, wherein the time-domain resources may be either contiguous or non-contiguous. Each terminal only needs to detect a wake-up signal within the time-domain resource carrying target wake-up information, thereby avoiding the complexity and power consumption caused by receiving wake-up signals across extended time-domain resources.

In some embodiments, the frequency domain and time domain also indicates wake-up information for different terminals or terminal groups, or indicates wake-up information for terminals corresponding to different POs or PO groups.

In process 1002, the terminal receives a wake-up signal for the terminal on a corresponding frequency-domain resource and/or time-domain resource.

In some embodiments, in a case where the wake-up signals corresponding to the at least two terminals are carried on different frequency-domain resources and/or time-domain resources, the terminal receives a wake-up signal on the frequency-domain resource and/or time-domain resource where the wake-up signal for the terminal itself is carried.

In some embodiments, in a case where the wake-up signals corresponding to the at least two terminal sets are carried on different frequency-domain resources and/or time-domain resources, the terminal first determines the terminal set to which the terminal belongs, and then receives a wake-up signal on the frequency-domain resource and/or time-domain resource where the wake-up signal for the terminal set to which the terminal belongs is carried.

In some embodiments, in a case where the wake-up signals corresponding to a plurality of terminal groups, POs, or PO groups are carried on different frequency-domain resources and/or time-domain resources, the terminal determines the terminal group to which the terminal belongs, and determines the frequency-domain resource and/or time-domain resource where the wake-up signal carrying the wake-up information for the terminal group to which the terminal belongs as the frequency-domain resource and/or time-domain resource corresponding to the terminal.

For example, the terminal receives a wake-up signal and wake-up information in the following processes.

In S1, the terminal determines the terminal group to which the terminal belongs.

In a case where the wake-up information carried in the wake-up signal indicates the wake-up information corresponding to a plurality of terminal groups, the terminal needs to determine the terminal group to which the terminal itself belongs. In the existing paging techniques, the terminal determines the PO to which the terminal belongs and the terminal group within the PO based on the ID of the terminal and paging-related configuration information transmitted from the network, and determines, based on a power saving signal, whether to attempt to detect paging indication information on the PO. In the present solution, the PO to which the terminal belongs and the terminal group within the PO are determined in a similar manner.

In S2, the terminal determines a target time-domain resource and/or a target frequency-domain bandwidth or subcarrier group that carries the target wake-up information.

The terminal determines the wake-up signal carrying the wake-up information for the terminal group to which the terminal belongs, and determines the target frequency-domain bandwidth, subcarrier group, or target time-domain resource that carries the wake-up signal. The frequency-domain bandwidth, subcarrier group, or time-domain resource carrying the wake-up signal is an entire frequency-domain bandwidth, subcarrier group or time-domain resource carrying one wake-up signal, or is a portion of the frequency-domain bandwidth, subcarrier group, or time domain resource carrying one wake-up signal.

In some embodiments, a corresponding relationship is present between the wake-up information corresponding to the terminal group and the frequency-domain bandwidth, subcarrier group, or the time-domain resource that carries the wake-up information. The corresponding relationship may be determined based on configuration information indicated by the network. For example, the configuration parameters include content of the wake-up information carried in the wake-up signal, an indicatable PO and the number of terminal groups within the PO, and configuration information used to determine the frequency-domain bandwidth, subcarrier group, or time domain that carries different portions of wake-up information. Different portions of wake-up information may be carried on different frequency-domain bandwidths, subcarrier groups, or time-domain resources for one wake-up signal, or may be carried on frequency-domain bandwidths, subcarrier groups, or time-domain resources corresponding to different wake-up signals.

In some embodiments, in a case where different portions of wake-up information are carried on different frequency-domain bandwidths, subcarrier groups, or time-domain resources for one wake-up signal, the wake-up signal includes a common portion such as a synchronization signal and a preamble, and the plurality of different frequency-domain bandwidths, subcarrier groups, or time-domain resources. Upon receiving the target frequency-domain bandwidth, subcarrier group, or time-domain resource, the terminal also receives the synchronization signal and preamble of the common portion to achieve identification of the wake-up signal and time-frequency synchronization.

In S3, the terminal receives wake-up information based on a target time-domain resource and/ or a target frequency-domain bandwidth or subcarrier group.

Upon determining the target frequency-domain bandwidth, subcarrier group, or time-domain resource that carries target wake-up information, the terminal only needs to receive the target frequency-domain bandwidth, subcarrier group, or time-domain resource to acquire the target wake-up information. The target frequency-domain bandwidth, subcarrier group, or time-domain resource corresponds to the entire frequency-domain bandwidth or subcarrier group for one wake-up signal, or corresponds to a portion of the frequency-domain bandwidth, subcarrier group, or time-domain bandwidth for one wake-up signal. Therefore, the terminal does not need to detect non-target frequency-domain bandwidths, subcarrier groups, or time-domain resources, including wake-up signals corresponding to non-target frequency-domain bandwidths, subcarrier groups, or time-domain resources or non-target frequency-domain bandwidths, subcarrier groups, or time-domain resources in the frequency-domain bandwidths, subcarrier groups, or time-domain resources carrying the wake-up signal.

The power saving signal introduced in R17 is carried over the PDCCH. The receiver of the terminal supports OFDM, and the power saving signal supports a large number of bits, and can carry power saving information of a plurality of POs and power saving information of a plurality of terminal groups within each PO of the plurality of POs. In the scenario where the wake-up signal introduced in R18 is used in power saving for paging receiving of the terminal, the overhead of the wake-up signal still needs to be considered. It requires that that the wake-up signal is not used for a single terminal but can simultaneously indicate wake-up information for a plurality of terminals. Since the transmission of the wake-up signal adopts OOK modulation or FSK modulation, the information rate is limited, and a single wake-up signal is unsuitable to carry a large number of bits. Therefore, it is difficult to simultaneously indicate wake-up information for a plurality of terminals over a single wake-up signal. The solutions according to the embodiments of the present disclosure provide a method for transmitting or receiving wake-up information, in which wake-up signals carried on different frequency-domain bandwidths or subcarrier groups are used to indicate wake-up information for different terminals or terminal groups. That is, the frequency-domain bandwidths or subcarrier groups carrying the wake-up information for different terminals or terminal groups are different from each other. Alternatively, wake-up signals carried on different time-domain resources are used to indicate wake-up information for different terminals or terminal groups. The above two methods may also be used in combination.

That is, in the methods for transmitting and receiving wake-up information according to the embodiments of the present disclosure, the wake-up information for different terminal groups is carried on different frequency-domain bandwidths, subcarrier groups, or time-domain resources, such that the terminal only needs to receive a wake-up signal carrying less information or a portion of the wake-up signal, which facilitates the power savings for the WUR of the terminal.

FIG. 18 illustrates a block diagram of an apparatus for transmitting wake-up signals according to some embodiments of the present disclosure. The apparatus has the functions implemented by the network device as illustrated in FIG. 8 or FIG. 10. As illustrated in FIG. 18, the apparatus includes a transmitting module 1801.

The transmitting module 1801 is configured to transmit a wake-up signal, wherein wake-up signals corresponding to at least two terminals or at least two terminal sets are carried on different frequency-domain resources and/or different time-domain resources.

In some embodiments, the wake-up signal is received by a first receiver of the terminal, and the wake-up signal is used to wake up a second receiver of the terminal.

In some embodiments, each of the at least two terminal sets includes: terminals in a terminal group, or terminals corresponding to a PO, or terminals corresponding to a PO group.

In some embodiments, in a case where the wake-up signals corresponding to the at least two terminals or the at least two terminal sets are carried on different frequency-domain resources, the wake-up signals corresponding to the at least two terminals or the at least two terminal sets are carried on different frequency-domain bandwidths, different subcarrier groups, or different subcarrier segments.

In some embodiments, in a case where the wake-up signals corresponding to the at least two terminals or the at least two terminal sets are carried on different frequency-domain bandwidths or different subcarrier groups, a plurality of frequency-domain bandwidths or subcarrier groups in a frequency domain are used to carry different wake-up signals, wherein the different wake-up signals are used to carry wake-up information for different terminals or terminal sets.

In some embodiments, in a case where the wake-up signals corresponding to the at least two terminals or the at least two terminal sets are carried on different subcarrier segments, M subcarrier segments in a frequency domain are used to carry M bits, wherein bits carried on different subcarrier segments correspond to wake-up information for different terminals or terminal sets, M being an integer greater than or equal to 2.

In some embodiments, in a case where the wake-up signals corresponding to the at least two terminals or the at least two terminal sets are carried on different subcarrier segments, one subcarrier in each of M subcarrier segments in a frequency domain is modulated such that one of the wake-up signals is carried on the M subcarrier segments, M being an integer greater than or equal to 2.

In some embodiments, each frequency-domain bandwidth or subcarrier group in a plurality of frequency-domain bandwidths or subcarrier groups in the frequency domain includes M subcarrier segments.

In some embodiments, one subcarrier in the each of the M subcarrier segments in the frequency domain constitutes one subcarrier group, wherein each of the subcarrier groups is used to carry one of the wake-up signals.

In some embodiments, in a case where the wake-up signals corresponding to the at least two terminals or the at least two terminal sets are carried on different frequency-domain bandwidths or different subcarrier groups, each frequency-domain bandwidth or subcarrier group in a plurality of frequency-domain bandwidths or subcarrier groups in a frequency domain includes N subcarriers, wherein the N subcarriers are generated by performing DFT on one of the wake-up signals.

In some embodiments, in a case where the wake-up signals corresponding to the at least two terminals or the at least two terminal sets are carried on different frequency-domain bandwidths or different subcarrier groups, each frequency-domain bandwidth or subcarrier group in a plurality of frequency-domain bandwidths or subcarrier groups in a frequency domain includes N subcarriers; wherein the N subcarriers are divided into M pairs of subcarrier segments, wherein in each pair of the M pairs of subcarrier segments, one subcarrier segment is modulated and another subcarrier segment is defined as zero-power, such that one of the wake-up signals is carried on the N subcarriers.

In some embodiments, in a case where the wake-up signals corresponding to the at least two terminals or the at least two terminal sets are carried on different frequency-domain bandwidths or different subcarrier groups, each frequency-domain bandwidth or subcarrier group in a plurality of frequency-domain bandwidths or subcarrier groups in a frequency domain includes N subcarriers; wherein the N subcarriers are divided into 2^{M} subcarrier segments, wherein in the 2^{M} subcarrier segments, one subcarrier segment is modulated and other subcarrier segments are defined as zero-power, such that one of the wake-up signals is carried on the N subcarriers.

In some embodiments, in a case where each of the at least two terminal sets includes terminals corresponding to one PO or terminals corresponding to one PO group, terminals corresponding to each PO are divided into a plurality of terminal groups, and each bit in wake-up information carried on one of the wake-up signals is used to indicate wake-up information for one of the plurality of terminal groups; wake-up information for a plurality of different terminal groups corresponding to different POs is carried in wake-up signals in different frequency-domain bandwidths, different subcarrier groups, or on different subcarrier segments.

In some embodiments, the transmitting module is further configured to transmit configuration information, wherein the configuration information is used for the terminal to determine at least one of: a frequency-domain resource carrying a wake-up signal, content of wake-up information carried in a wake-up signal, a wake-up signal carrying target wake-up information, or a frequency-domain resource for a wake-up signal corresponding to target wake-up information.

In some embodiments, in a case where the wake-up signals corresponding to the at least two terminals or the at least two terminal sets are carried on different time-domain resources: wake-up signals carried on different time-domain resources are different portions of a wake-up signal for the same terminal or terminal set, or wake-up signals carried on different time-domain resources are wake-up signals for different terminals or terminal sets.

In some embodiments, the apparatus further includes a processing module, a receiving module, a storage module, or the like. The processing module is configured to process data or signals in the apparatus, for example, generating signals, parsing signals, or the like. The receiving module is configured to receive signals or data from the terminal. The storage module is configured to store to-be-transmitted signals or data or received signals or data.

FIG. 19 illustrates a block diagram of an apparatus for receiving wake-up signals according to some embodiments of the present disclosure. The apparatus has the functions implemented by the terminal as illustrated in FIG. 9 or FIG. 10. As illustrated in FIG. 19, the apparatus includes a receiving module 1901.

The receiving module 1901 is configured to receive a wake-up signal for the terminal on a frequency-domain resource and/or a time-domain resource corresponding to the terminal; wherein wake-up signals for at least two terminals or at least two terminal sets are carried on different frequency-domain resources and/or different time-domain resources.

In some embodiments, the apparatus further includes a determining module, configured to: determine a terminal group to which the terminal belongs; and determine a frequency-domain resource and/or a time-domain resource on which the wake-up signal used for carrying wake-up information for the terminal group to which the terminal belongs is located.

In some embodiments, the apparatus further includes a determining module, configured to: determine a terminal group to which the terminal belongs; and determine a frequency-domain resource and/or a time-domain resource on which the wake-up signal used for carrying wake-up information for the terminal group to which the terminal belongs is located as the frequency-domain resource and/or the time-domain resource corresponding to the terminal.

In some embodiments, the wake-up signal is received by a first receiver of the terminal, and the wake-up signal is used to wake up a second receiver of the terminal.

In some embodiments, each of the at least two terminal sets includes: terminals in a terminal group, or terminals corresponding to a PO, or terminals corresponding to a PO group.

In some embodiments, in a case where the wake-up signals corresponding to the at least two terminals or the at least two terminal sets are carried on different frequency-domain resources, the wake-up signals corresponding to the at least two terminals or the at least two terminal sets are carried on different frequency-domain bandwidths, different subcarrier groups, or different subcarrier segments.

In some embodiments, in a case where the wake-up signals corresponding to the at least two terminals or the at least two terminal sets are carried on different frequency-domain bandwidths or different subcarrier groups, a plurality of frequency-domain bandwidths or subcarrier groups in a frequency domain are used to carry different wake-up signals, wherein the different wake-up signals are used to carry wake-up information for different terminals or terminal sets.

In some embodiments, in a case where the wake-up signals corresponding to the at least two terminals or the at least two terminal sets are carried on different subcarrier segments, M subcarrier segments in a frequency domain are used to carry M bits, wherein bits carried on different subcarrier segments correspond to wake-up information for different terminals or terminal sets, M being an integer greater than or equal to 2.

In some embodiments, in a case where the wake-up signals corresponding to the at least two terminals or the at least two terminal sets are carried on different subcarrier segments, one subcarrier in each of M subcarrier segments in a frequency domain is modulated such that one of the wake-up signals is carried on the M subcarrier segments, M being an integer greater than or equal to 2.

In some embodiments, each frequency-domain bandwidth or subcarrier group in a plurality of frequency-domain bandwidths or subcarrier groups in the frequency domain includes M subcarrier segments.

In some embodiments, the one subcarrier in the each of the M subcarrier segments in the frequency domain constitutes one subcarrier group, wherein each of the subcarrier groups is used to carry one of the wake-up signals.

In some embodiments, in a case where the wake-up signals corresponding to the at least two terminals or the at least two terminal sets are carried on different frequency-domain bandwidths or different subcarrier groups, each frequency-domain bandwidth or subcarrier group in a plurality of frequency-domain bandwidths or subcarrier groups in a frequency domain includes N subcarriers, wherein the N subcarriers are generated by performing DFT on one of the wake-up signals.

In some embodiments, in a case where the wake-up signals corresponding to the at least two terminals or the at least two terminal sets are carried on different frequency-domain bandwidths or different subcarrier groups, each frequency-domain bandwidth or subcarrier group in a plurality of frequency-domain bandwidths or subcarrier groups in a frequency domain includes N subcarriers; wherein the N subcarriers are divided into M pairs of subcarrier segments, wherein in each pair of the M pairs of subcarrier segments, one subcarrier segment is modulated and another subcarrier segment is defined as zero-power, such that one of the wake-up signals is carried on the N subcarriers.

In some embodiments, in a case where the wake-up signals corresponding to the at least two terminals or the at least two terminal sets are carried on different frequency-domain bandwidths or different subcarrier groups, each frequency-domain bandwidth or subcarrier group in a plurality of frequency-domain bandwidths or subcarrier groups in a frequency domain includes N subcarriers; wherein the N subcarriers are divided into 2^{M} subcarrier segments, wherein in the 2^{M} subcarrier segments, one subcarrier segment is modulated and other subcarrier segments are defined as zero-power, such that one of the wake-up signals is carried on the N subcarriers.

In some embodiments, in a case where each of the at least two terminal sets includes terminals corresponding to one PO or terminals corresponding to one PO group, terminals corresponding to each PO are divided into a plurality of terminal groups, and each bit in wake-up information carried in one of the wake-up signals is used to indicate wake-up information for one of the plurality of terminal groups; wake-up information for a plurality of different terminal groups corresponding to different POs is carried in wake-up signals on different frequency-domain bandwidths, different subcarrier groups, or different subcarrier segments.

In some embodiments, the receiving module is further configured to receive configuration information from a network device, wherein the configuration information is used for the terminal to determine at least one of:
a frequency-domain resource carrying a wake-up signal;
content of wake-up information carried in a wake-up signal;
a wake-up signal carrying target wake-up information; or
a frequency-domain resource for a wake-up signal corresponding to target wake-up information.

In some embodiments, in a case where the wake-up signals corresponding to the at least two terminals or the at least two terminal sets are carried on different frequency-domain resources: wake-up signals carried on different time-domain resources are different portions of a wake-up signal of the same terminal or terminal set, or wake-up signals carried on different time-domain resources are wake-up signals of different terminals or terminal sets.

In some embodiments, the apparatus further includes a processing module, a receiving module, a storage module, or the like. The processing module is configured to process data or signals in the apparatus, for example, generating signals, parsing signals, or the like. The receiving module is configured to receive signals or data from the network device or another terminal. The storage module is configured to store to-be-transmitted signals or data or received signals or data.

It should be noted that, for the apparatus according to the embodiments described above, the division of the functional modules is merely exemplary. In practice, the functions described above can be assigned to different functional modules as needed; that is, the internal structure of the apparatus can be divided into different functional modules, so as to implement all or a part of the above functions.

With regard to the apparatus in the embodiments, the specific manner in which each module performs operations has been described in detail in the embodiments related to the method and will not be described in detail herein.

FIG. 20 illustrates a schematic structural diagram of a communication device 200 according to some embodiments of the present disclosure. The communication device 200 includes a processor 2001, a receiver 2002, a transmitter 2003, a memory 2004, and a bus 2005.

The processor 2001 includes one or more processing cores, and achieves various functional applications and information processing by running software programs and modules.

The receiver 2002 and the transmitter 2003 may be implemented as a communication assembly. The communication assembly may be a communication chip and may be referred to as a transceiver. The memory 2004 is connected to the processor 2001 over the bus 2005. The memory 2004 is configured to store a computer program, and the processor 2001 is configured to run the computer program to implement the processes in the above method embodiments.

In addition, the memory 2004 is practiced by any type of volatile or non-volatile storage device or combinations thereof. The volatile or non-volatile storage device includes but is not limited to a magnetic disk or an optical disk, an electrically erasable programmable read-only memory (EEPROM), an erasable programmable read-only memory (EPROM), a static random-access memory (SRAM), a read-only memory (ROM), a magnetic memory, a flash memory, and a programmable ROM (PROM).

In some embodiments, in a case where the communication device 2000 is implemented as the above terminal, the receiver 2002 and the processor 2001 implement the computer program to cause the communication device to perform the processes, performed by the terminal, in the method as illustrated in either FIG. 9 or FIG. 10.

In some embodiments, in a case where the communication device 2000 is implemented as the above network device, the transmitter 2003 and the processor 2001 implement the computer program to cause the communication device to perform the processes, performed by the network device, in the method as illustrated in either FIG. 8 or FIG. 10.

Some embodiments of the present disclosure further provide a computer-readable storage medium storing a computer program, wherein the computer program, when run by a processor, causes the processor to perform all or part of the processes, performed by the terminal or network device, in the method illustrated in FIG. 8, FIG. 9 or FIG. 10.

Some embodiments of the present disclosure further provide a chip. The chip, when running in a communication device, causes the communication device to perform all or part of the processes, performed by the terminal or network device, in the method illustrated in FIG. 8, FIG. 9 or FIG. 10.

Some embodiments of the present disclosure further provide a computer program product. The computer program product includes one or more computer instructions stored in a computer-readable storage medium. The one or more computer instructions, when loaded by a processor of a communication device from the computer-readable storage medium and run by the processor, cause the communication device to perform all or part of the processes, performed by the terminal or network device, in the method illustrated in FIG. 8, FIG. 9 or FIG. 10.

Some embodiments of the present disclosure further provide a computer program. The computer program, when run by a processor of a communication device, causes the communication device to perform all or part of the processes, performed by the terminal or network device, in the method illustrated in FIG. 8, FIG. 9 or FIG. 10.

A person skilled in the art shall appreciate that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are exemplary embodiments of the present disclosure, but not intended to limit the present disclosure. Any modifications, equivalent replacements, improvements and the like made within the spirit and principles of the present disclosure should be encompassed within the scope of protection of the present disclosure.

## Claims

1. A method for transmitting wake-up signals, performed by a network device, the method comprising:
transmitting a wake-up signal, wherein wake-up signals corresponding to at least two terminals or at least two terminal sets are carried on different frequency-domain resources and/or different time-domain resources.

2. The method according to claim 1, wherein the wake-up signal is received by a first receiver of the terminal, and the wake-up signal is used to wake up a second receiver of the terminal.

3. The method according to claim 1 or 2, wherein each of the at least two terminal sets comprises:
terminals in a terminal group; or
terminals corresponding to a paging occasion (PO); or
terminals corresponding to a PO group.

4. The method according to any one of claims 1 to 3, wherein in a case where the wake-up signals corresponding to the at least two terminals or the at least two terminal sets are carried on different frequency-domain resources, the wake-up signals corresponding to the at least two terminals or the at least two terminal sets are carried on different frequency-domain bandwidths, different subcarrier groups, or different subcarrier segments.

5. The method according to claim 4, wherein in a case where the wake-up signals corresponding to the at least two terminals or the at least two terminal sets are carried on different frequency-domain bandwidths or different subcarrier groups, a plurality of frequency-domain bandwidths or subcarrier groups in a frequency domain are used to carry different wake-up signals, wherein the different wake-up signals are used to carry wake-up information for different terminals or terminal sets.

6. The method according to claim 4, wherein in a case where the wake-up signals corresponding to the at least two terminals or the at least two terminal sets are carried on different subcarrier segments, M subcarrier segments in a frequency domain are used to carry M bits, wherein bits carried on different subcarrier segments correspond to wake-up information for different terminals or terminal sets, M being an integer greater than or equal to 2.

7. The method according to claim 4, wherein in a case where the wake-up signals corresponding to the at least two terminals or the at least two terminal sets are carried on different subcarrier segments, one of the wake-up signals is carried on M subcarrier segments by modulating one subcarrier in each of the M subcarrier segments in a frequency domain, M being an integer greater than or equal to 2.

8. The method according to claim 6 or 7, wherein each frequency-domain bandwidth or subcarrier group in a plurality of frequency-domain bandwidths or subcarrier groups in the frequency domain comprises M subcarrier segments.

9. The method according to claim 7, wherein the one subcarrier in the each of the M subcarrier segments in the frequency domain constitutes one subcarrier group, wherein each of the subcarrier groups is used to carry one of the wake-up signals.

10. The method according to claim 4, wherein in a case where the wake-up signals corresponding to the at least two terminals or the at least two terminal sets are carried on different frequency-domain bandwidths or different subcarrier groups, each frequency-domain bandwidth or subcarrier group in a plurality of frequency-domain bandwidths or subcarrier groups in a frequency domain comprises N subcarriers, wherein the N subcarriers are generated by performing discrete Fourier transformation (DFT) on one of the wake-up signals.

11. The method according to claim 4, wherein in a case where the wake-up signals corresponding to the at least two terminals or the at least two terminal sets are carried on different frequency-domain bandwidths or different subcarrier groups, each frequency-domain bandwidth or subcarrier group in a plurality of frequency-domain bandwidths or subcarrier groups in a frequency domain comprises N subcarriers;
wherein the N subcarriers are divided into M pairs of subcarrier segments, wherein one of the wake-up signals is carried on the N subcarriers by modulating one subcarrier segment in each pair of the M pairs of subcarrier segments while defining another subcarrier segment in each pair of the M pairs of subcarrier segments as zero-power.

12. The method according to claim 4, wherein in a case where the wake-up signals corresponding to the at least two terminals or the at least two terminal sets are carried on different frequency-domain bandwidths or different subcarrier groups, each frequency-domain bandwidth or subcarrier group in a plurality of frequency-domain bandwidths or subcarrier groups in a frequency domain comprises N subcarriers;
wherein the N subcarriers are divided into 2^{M} subcarrier segments, wherein one of the wake-up signals is carried on the N subcarriers by modulation one subcarrier segment in the 2^{M} subcarrier segments while defining other subcarrier segments in the 2^{M} subcarrier segments as zero-power.

13. The method according to any one of claims 4 to 12, wherein in a case where each of the at least two terminal sets comprises terminals corresponding to one PO or terminals corresponding to one PO group, terminals corresponding to each PO are divided into a plurality of terminal groups, and each bit in wake-up information carried on one of the wake-up signals is used to indicate wake-up information for one of the plurality of terminal groups;
wake-up information for a plurality of different terminal groups corresponding to different POs is carried on wake-up signals in different frequency-domain bandwidths, different subcarrier groups, or on different subcarrier segments.

14. The method according to any one of claims 4 to 13, further comprising:
transmitting configuration information, wherein the configuration information is used for the terminal to determine at least one of:
a frequency-domain resource carrying a wake-up signal;
content of wake-up information carried in a wake-up signal;
a wake-up signal carrying target wake-up information; or
a frequency-domain resource for a wake-up signal corresponding to target wake-up information.

15. The method according to any one of claims 1 to 3, wherein in a case where the wake-up signals corresponding to the at least two terminals or the at least two terminal sets are carried on different time-domain resources:
wake-up signals carried on different time-domain resources are different portions of a wake-up signal for a same terminal or terminal set; or
wake-up signals carried on different time-domain resources are wake-up signals for different terminals or terminal sets.

16. A method for receiving wake-up signals, performed by a terminal, the method comprising:
receiving a wake-up signal for the terminal on a frequency-domain resource and/or a time-domain resource corresponding to the terminal;
wherein wake-up signals for at least two terminals or at least two terminal sets are carried on different frequency-domain resources and/or different time-domain resources.

17. The method according to claim 16, further comprising:
determining a terminal group to which the terminal belongs; and
determining a frequency-domain resource and/or a time-domain resource on which a wake-up signal used for carrying wake-up information for the terminal group to which the terminal belongs is located as the frequency-domain resource and/or the time-domain resource corresponding to the terminal.

18. The method according to claim 16 or 17, wherein the wake-up signal is received by a first receiver of the terminal, and the wake-up signal is used to wake up a second receiver of the terminal.

19. The method according to any one of claims 16 to 18, wherein each of the at least two terminal sets comprises:
terminals in a terminal group; or
terminals corresponding to a paging occasion (PO); or
terminals corresponding to a PO group.

20. The method according to any one of claims 16 to 19, wherein in a case where the wake-up signals corresponding to the at least two terminals or the at least two terminal sets are carried on different frequency-domain resources, the wake-up signals corresponding to the at least two terminals or the at least two terminal sets are carried on different frequency-domain bandwidths, different subcarrier groups, or different subcarrier segments.

21. The method according to claim 20, wherein in a case where the wake-up signals corresponding to the at least two terminals or the at least two terminal sets are carried on different frequency-domain bandwidths or different subcarrier groups, a plurality of frequency-domain bandwidths or subcarrier groups in a frequency domain are used to carry different wake-up signals, wherein the different wake-up signals are used to carry wake-up information for different terminals or terminal sets.

22. The method according to claim 20, wherein in a case where the wake-up signals corresponding to the at least two terminals or the at least two terminal sets are carried on different subcarrier segments, M subcarrier segments in a frequency domain are used to carry M bits, wherein bits carried on different subcarrier segments correspond to wake-up information for different terminals or terminal sets, M being an integer greater than or equal to 2.

23. The method according to claim 20, wherein in a case where the wake-up signals corresponding to the at least two terminals or the at least two terminal sets are carried on different subcarrier segments, one of the wake-up signals is carried on M subcarrier segments by modulating one subcarrier in each of the M subcarrier segments in a frequency domain, M being an integer greater than or equal to 2.

24. The method according to claim 22 or 23, wherein each frequency-domain bandwidth or subcarrier group in a plurality of frequency-domain bandwidths or subcarrier groups in the frequency domain comprises M subcarrier segments.

25. The method according to claim 23, wherein the one subcarrier in each of the M subcarrier segments in the frequency domain constitutes one subcarrier group, wherein each of the subcarrier groups is used to carry one of the wake-up signals.

26. The method according to claim 20, wherein in a case where the wake-up signals corresponding to the at least two terminals or the at least two terminal sets are carried on different frequency-domain bandwidths or different subcarrier groups, each frequency-domain bandwidth or subcarrier group in a plurality of frequency-domain bandwidths or subcarrier groups in a frequency domain comprises N subcarriers, wherein the N subcarriers are generated by performing discrete Fourier transformation (DFT) on one of the wake-up signals.

27. The method according to claim 20, wherein in a case where the wake-up signals corresponding to the at least two terminals or the at least two terminal sets are carried on different frequency-domain bandwidths or different subcarrier groups, each frequency-domain bandwidth or subcarrier group in a plurality of frequency-domain bandwidths or subcarrier groups in a frequency domain comprises N subcarriers;
wherein the N subcarriers are divided into M pairs of subcarrier segments, wherein one of the wake-up signals is carried on the N subcarriers by modulating one subcarrier segment in each pair of the M pairs of subcarrier segments while defining another subcarrier segment in each pair of the M pairs of subcarrier segments as zero-power.

28. The method according to claim 20, wherein in a case where the wake-up signals corresponding to the at least two terminals or the at least two terminal sets are carried on different frequency-domain bandwidths or different subcarrier groups, each frequency-domain bandwidth or subcarrier group in a plurality of frequency-domain bandwidths or subcarrier groups in a frequency domain comprises N subcarriers;
wherein the N subcarriers are divided into 2M subcarrier segments, wherein one of the wake-up signals is carried on the N subcarriers by modulating one subcarrier segment in the 2M subcarrier segments while defining other subcarrier segments in the 2M subcarrier segments as zero-power.

29. The method according to any one of claims 20 to 28, wherein in a case where each of the at least two terminal sets comprises terminals corresponding to one PO or terminals corresponding to one PO group, terminals corresponding to each PO are divided into a plurality of terminal groups, and each bit in wake-up information carried on one of the wake-up signals is used to indicate wake-up information for one of the plurality of terminal groups;
wake-up information for a plurality of different terminal groups corresponding to different POs is carried in wake-up signals on different frequency-domain bandwidths, different subcarrier groups, or different subcarrier segments.

30. The method according to any one of claims 20 to 29, further comprising:
receiving configuration information from a network device, wherein the configuration information is used for the terminal to determine at least one of:
a frequency-domain resource carrying a wake-up signal;
content of wake-up information carried in a wake-up signal;
a wake-up signal carrying target wake-up information; or
a frequency-domain resource for a wake-up signal corresponding to target wake-up information.

31. The method according to any one of claims 16 to 30, wherein in a case where the wake-up signals corresponding to the at least two terminals or the at least two terminal sets are carried on different frequency-domain resources:
wake-up signals carried on different time-domain resources are different portions of a wake-up signal of the same terminal or terminal set; or
wake-up signals carried on different time-domain resources are wake-up signals of different terminals or terminal sets.

32. An apparatus for transmitting wake-up signals, comprising:
a transmitting module, configured to transmit a wake-up signal, wherein wake-up signals corresponding to at least two terminals or at least two terminal sets are carried on different frequency-domain resources and/or different time-domain resources.

33. An apparatus for receiving wake-up signals, comprising:
a receiving module, configured to receive a wake-up signal for a terminal on a frequency-domain resource and/or a time-domain resource corresponding to the terminal;
wherein wake-up signals for at least two terminals or at least two terminal sets are carried on different frequency-domain resources and/or different time-domain resources.

34. A network device, comprising: a processor, a memory, and a transceiver;
wherein the memory stores a computer program, the processor, when running the computer program, causes the network device to perform the method for transmitting wake-up signals as defined in any one of claims 1 to 15.

35. A terminal, comprising: a processor, a memory, and a transceiver;
wherein the memory stores a computer program, the processor, when running the computer program, causes the terminal to perform the method for receiving wake-up signals as defined in any one of claims 16 to 31.

36. A computer-readable storage medium, storing a computer program, wherein the computer program, when run by a processor of a communication device, causes the communication device to perform the method for transmitting wake-up signals as defined in any one of claims 1 to 15 or the method for receiving wake-up signals as defined in any one of claims 16 to 31.

37. A chip, wherein the chip is configured to run in a communication device, to cause the communication device to perform the method for transmitting wake-up signals as defined in any one of claims 1 to 15 or the method for receiving wake-up signals as defined in any one of claims 16 to 31.

38. A computer program product, comprising one or more computer instructions stored in a computer-readable storage medium, wherein the one or more computer instructions, when loaded by a processor of a communication device from the computer-readable storage medium and run by the processor, cause the communication device to perform the method for transmitting wake-up signals as defined in any one of claims 1 to 15 or the method for receiving wake-up signals as defined in any one of claims 16 to 31.

39. A computer program, wherein the computer program, when run by processor of a communication device, causes the communication device to perform the method for transmitting wake-up signals as defined in any one of claims 1 to 15 or the method for receiving wake-up signals as defined in any one of claims 16 to 31.
